# EUROPÄISCHE PATENTSCHRIFT

(11) **EP 1 912 765 B1**
(45) Veröffentlichungstag und Bekanntmachung des Hinweises auf die Patenterteilung: **30.06.2010**
(21) Anmeldenummer: 06777809.2
(22) Anmeldetag: 17.07.2006
(51) Int. Cl.: B25F 5/02, H01M 2/10

(54) **ELEKTROGERÄT, INSBESONDERE ELEKTROHANDWERKZEUG**
ELECTRIC DEVICE, PARTICULARLY ELECTRIC HAND TOOL
APPAREIL ELECTRIQUE, EN PARTICULIER OUTIL ELECTRIQUE A MAIN

(30) Priorität: 03.08.2005 DE 102005036448
(43) Veröffentlichungstag der Anmeldung: 23.04.2008
(73) Patentinhaber: ROBERT BOSCH GMBH, 70442 Stuttgart (DE)
(72) Erfinder: BREITENBACH, Jan, 70569 Stuttgart (DE)
(86) Internationale Anmeldenummer: PCT/EP2006/064315
(87) Internationale Veröffentlichungsnummer: WO 2007/014840

(56) Entgegenhaltungen:
- EP-A- 1 036 636
- EP-A- 1 459 853
- EP-A- 1 481 769
- WO-A-00/65674
- DE-A1- 10 304 656
- DE-A1- 19 521 426
- DE-A1- 19 933 015
- DE-U1- 9 002 514
- GB-A- 2 380 761
- US-A- 5 792 573
- US-A1- 2001 040 036
- US-B1- 6 350 149
- US-B1- 6 729 415

## Beschreibung

### Stand der Technik

Die Erfindung geht aus von einem Elektrogerät, insbesondere einem Elektrohandwerkzeug, nach dem Oberbegriff des Anspruchs 1.

Solche Elektrogeräte sind aus EP1459853A1, US2001/0040036A1 und EP1036636A1 bekannt.

Aus der DE 38 41 735 A1 ist ein Elektrogerät mit einem abnehmbaren Akkumulator bekannt. Das Elektrogerät ist mit zwei Rastelementen versehen, die bei einem Anfügen des Akkumulators an eine Aufnahme des Elektrogeräts in Ausnehmungen des Akkumulators einrasten, wodurch der Akkumulator verriegelt wird. Zum Entriegeln des Akkumulators weist dieser zwei Druckknöpfe auf, wobei die Rastelemente durch ein Drücken auf die Druckknöpfe den Akkumulator freigeben.

### Vorteile der Erfindung

Die Erfindung geht aus von einem Elektrogerät gemäß Anspruch 1, insbesondere einem Elektrohandwerkzeug, mit einer abnehmbaren Stromversorgungseinheit, einem Aufnahmebereich zur Aufnahme der in einer Aufnahmerichtung in den Aufnahmebereich hineingeführten Stromversorgungseinheit, einem Führungsmittel zur Führung der Stromversorgungseinheit in dem Aufnahmebereich und einer Verriegelungseinrichtung zum Verriegeln der Stromversorgungseinheit in dem Aufnahmebereich.

Es wird vorgeschlagen, dass die Verriegelungseinrichtung ein Rastmittel aufweist, das von einer Ausformung des Führungsmittels gebildet ist. Durch eine erfindungsgemäße Ausgestaltung kann ein für das Führungsmittel vorgesehener Bauraum vorteilhaft für die Verriegelungseinrichtung genutzt werden, wodurch eine kompakte Bauform und eine einfache Montage des Elektrogeräts erreicht werden können. Unter einer "Ausformung des Führungsmittels" soll in diesem Zusammenhang eine zu einem Einrasten vorgesehene Ausgestaltung des Führungsmittels verstanden werden, wie beispielsweise eine Ausnehmung einer als Führungsmittel ausgebildeten Anlagefläche oder ein vorspringender Abschnitt einer solchen Anlagefläche. Unter einer "Anlagefläche" soll in diesem Zusammenhang eine Fläche des Aufnahmebereichs oder der Stromversorgungseinheit verstanden werden, die im verriegelten Zustand an einer Fläche der Stromversorgungseinheit bzw. des Aufnahmebereichs anliegt.

Vorteilhafterweise weist die Stromversorgungseinheit ein Gehäuse mit einer Seitenfläche auf, die als Führungsmittel ausgebildet ist. Es kann dadurch eine besonders platzsparende Ausgestaltung des Führungsmittels erzielt werden. Um eine effektive Führung der Stromversorgungseinheit zu erreichen, kann die Seitenfläche bei einem Hineinführen der Stromversorgungseinheit überwiegend parallel zur Aufnahmerichtung ausgerichtet und als Anlagefläche ausgebildet sein, die im verriegelten Zustand an einer Fläche des Aufnahmebereichs anliegt. Unter einer "Seitenfläche" soll im Gegensatz zu einer Deckfläche und einer Bodenfläche insbesondere eine seitliche Außenfläche der Stromversorgungseinheit verstanden werden, wobei "seitlich" auf die Aufnahmerichtung bezogen ist.

Eine besonders kompakte Ausgestaltung der Verriegelungseinrichtung kann dadurch erreicht werden, dass das Führungsmittel zumindest eine Führungsleiste mit einer als Rastmittel ausgebildeten Unterbrechung aufweist. Zusätzlich kann eine Orientierung der Stromversorgungseinheit bei einem Hineinführen in den Aufnahmebereich für einen Bediener leicht erkennbar sein.

Um ein sicheres Halten der Stromversorgungseinheit zu erreichen, insbesondere um ein unerwünschtes Verdrehen der im Aufnahmebereich verriegelten Stromversorgungseinheit zu verhindern, weist das Elektrogerät ein Rastelement auf, das im verriegelten Zustand in Ausformungen beidseitig der Stromversorgungseinheit eingerastet ist.

Das Rastelement ist von einem zusammenhängenden Betätigungselement gehalten, wodurch eine besonders einfache Montage und eine leichte Bedienung der Verriegelungseinrichtung erzielt werden können.

Ein versehentliches Entriegeln der Stromversorgungseinheit kann dadurch verhindert werden, dass das Elektrogerät mit einem Betätigungselement zum Entriegeln der Stromversorgungseinheit versehen ist, wobei durch ein Ziehen an dem Betätigungselement senkrecht zur Aufnahmerichtung die Stromversorgungseinheit freigegeben wird.

In einer weiteren Ausgestaltung ist das Elektrogerät mit einem Betätigungselement zum Entriegeln der Stromversorgungseinheit versehen, das relativ zum Aufnahmebereich in Aufnahmerichtung beweglich ist. Hierdurch kann ein für einen Bediener handliches und intuitives Entriegeln erzielt werden.

Zweckmäßigerweise ist die Verriegelungseinrichtung zum Entriegeln der Stromversorgungseinheit durch einen an der Stromversorgungseinheit ausgeübten und die gesamte Stromversorgungseinheit relativ zum Aufnahmebereich in Bewegung setzenden Druck in Aufnahmerichtung vorgesehen. Es kann dadurch ein separates Betätigungselement eingespart werden.

Es wird ferner vorgeschlagen, dass die Verriegelungseinrichtung eine Blattfeder aufweist, die eine Rastausformung umfasst. Dadurch können günstige und robuste Komponenten eingesetzt werden.

In diesem Zusammenhang ist das Elektrogerät in einer weiteren Ausführungsvariante mit einem als Schiebeelement ausgebildeten Betätigungselement versehen, wobei die Blattfeder durch ein Schieben des Schiebeelements in einer der Aufnahmerichtung entgegengesetzten Richtung in einen die Stromversorgungseinheit freigebenden Zustand verformt wird. Es kann dadurch eine für einen Bediener intuitiv bedienbare Entriegelungseinrichtung erreicht werden, die außerdem eine hohe Sicherheit gegen ein unerwünschtes Entriegeln der Stromversorgungseinheit bietet.
Eine weitere Steigerung der Kompaktheit des Elektrogeräts kann dadurch erzielt werden, dass die Stromversorgungseinheit Energiespeichereinheiten umfasst, wobei alle Energiespeichereinheiten im verriegelten Zustand der Stromversorgungseinheit im Aufnahmebereich angeordnet sind. Dies bietet außerdem einen vorteilhaften Schutz der Energiespeichereinheiten im verriegelten Zustand.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Handwerkzeugmaschine mit einer abnehmbaren Stromversorgungseinheit und einem Betätigungselement,
- Fig. 2: eine Ansicht der Stromversorgungseinheit aus Figur 1 von oben,
- Fig. 3: die Stromversorgungseinheit aus Figur 1 in einer Seitenansicht,
- Fig. 4: eine Ansicht des Betätigungselements aus Figur 1 von oben,
- Fig. 5: eine alternative Stromversorgungseinheit und ein alternatives Betätigungselement,
- Fig. 6: eine weitere Stromversorgungseinheit mit einer Rastausformung in einer Seitenfläche und ein weiteres Betätigungselement,
- Fig. 7: die Handwerkzeugmaschine mit der Stromversorgungseinheit aus Figur 5 und einem weiteren Betätigungselement,
- Fig. 8: eine Ansicht der Stromversorgungseinheit und des Betätigungselements aus Figur 7 von oben,
- Fig. 9: ein weiteres Betätigungselement,
- Fig. 10: zwei Rastelemente,
- Fig. 11: die Rastelemente aus Figur 10 mit einem Betätigungselement,
- Fig. 12: eine alternative Stromversorgungseinheit mit Rastmitteln und in die Rastmittel eingerastete Federn,
- Fig. 13: die Federn aus Figur 12 und ein Betätigungselement,
- Fig. 14: eine Ansicht des Betätigungselements aus Figur 13 von oben,
- Fig. 15: die Handwerkzeugmaschine mit der Stromversorgungseinheit aus Figur 12,
- Fig. 16: eine alternative Stromversorgungseinheit mit einem gefederten Pin,
- Fig. 17: eine Kulisse zur Führung des Pins aus Figur 16,
- Fig. 18: die Handwerkzeugmaschine mit der Stromversorgungseinheit aus Figur 16,
- Fig. 19: einen Schieberpin in einer alternativen Kulisse,
- Fig. 20: eine alternative Stromversorgungseinheit und ein Schiebeelement,
- Fig. 21: die Stromversorgungseinheit aus Figur 20 und einen Entriegelungsknopf und
- Fig. 22: die Stromversorgungseinheit aus Figur 20 und einen Hebel.

### Beschreibung der Ausführungsbeispiele

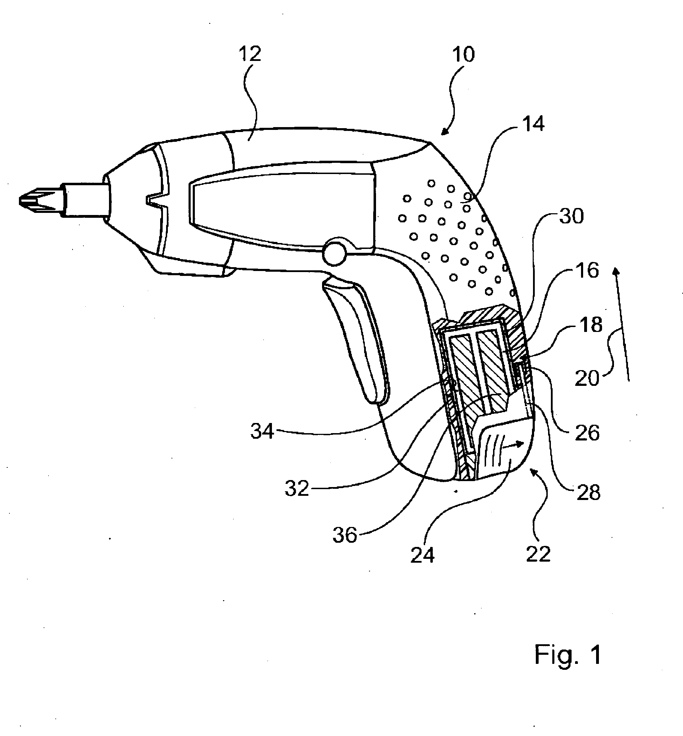

In Figur 1 ist ein als Handwerkzeugmaschine 10 ausgebildetes Elektrogerät dargestellt. Die Handwerkzeugmaschine 10 weist ein Motorgehäuse 12 und einen Handgriff 14 auf. Im Handgriff 14 sind ein Aufnahmebereich 16 zur Aufnahme einer abnehmbaren Stromversorgungseinheit 18 in einer Aufnahmerichtung 20 und eine Verriegelungseinrichtung 22 vorgesehen, die dazu dient, die Stromversorgungseinheit 18 in dem Aufnahmebereich 16 zu verriegeln. Zum Betätigen der Verriegelungseinrichtung 22 ist der Handgriff 14 mit einem Betätigungselement 24 versehen, das von einer an einer Aufhängung 26 befestigten Feder 28 gehalten ist. Die Stromversorgungseinheit 18 umfasst ein Gehäuse 30 mit einer Seitenfläche 32, die an einer inneren Fläche 34 des Handgriffs 14 anliegt. Das Gehäuse 30 umschließt als Batteriezellen ausgebildete Energiespeichereinheiten 36, die im verriegelten Zustand der Stromversorgungseinheit 18 innerhalb des Aufnahmebereichs 16 angeordnet sind.

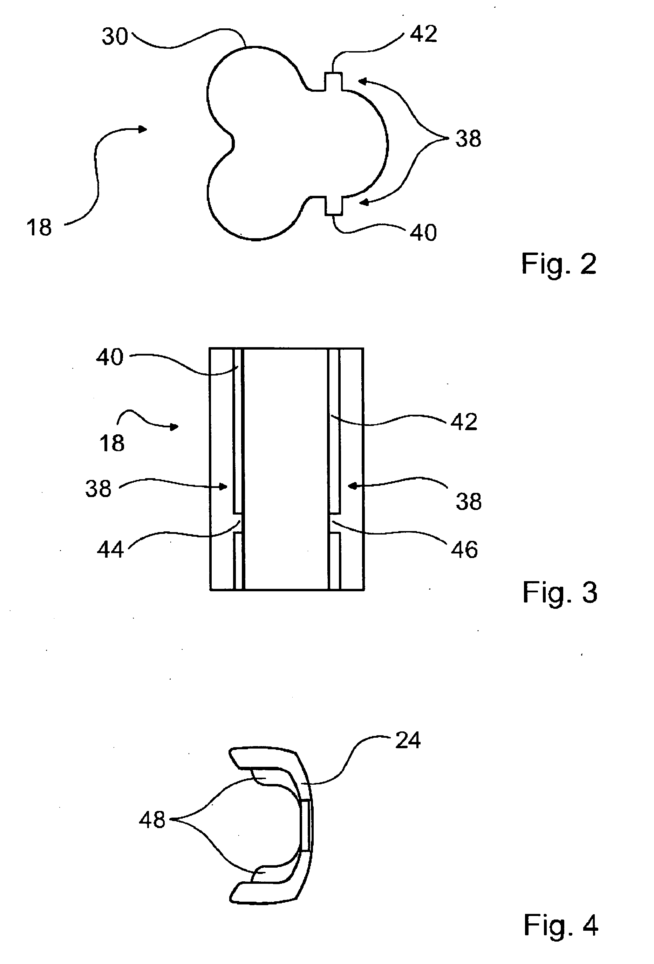

Zur Führung der Stromversorgungseinheit 18 in dem Aufnahmebereich 16 ist die Stromversorgungseinheit 18 mit einem Führungsmittel 38 versehen, das zwei in Figur 2 näher dargestellte Führungsleisten 40, 42 aufweist. Diese greifen jeweils in eine in den Figuren nicht dargestellte Führungsnute des Handgriffs 14 ein.

Durch die in Figur 3 dargestellte Ausgestaltung des Führungsmittels 38 dient dieses auch zu einem Ver- und Entriegeln der Stromversorgungseinheit 18 in dem Aufnahmebereich 16. Dafür umfassen die Führungsleisten 40, 42 jeweils eine in Figur 3 dargestellte Unterbrechung, die ein Rastmittel 44 bzw. 46 der Verriegelungseinrichtung 22 bildet. In diese Ausformungen des Führungsmittels 38 ist im verriegelten Zustand beidseitig der Stromversorgungseinheit 18 ein in Figur 4 gezeigtes Rastelement 48 eingerastet. Dieses Rastelement 48 ist von dem Betätigungselement 24 gehalten und durch die Feder 28 in die als Unterbrechungen ausgebildeten Rastmittel 44, 46 hineingedrückt. Um die Stromversorgungseinheit 18 zu entriegeln, wird an dem Betätigungselement 24 von einem Bediener eine Zugkraft senkrecht zur Aufnahmerichtung 20 ausgeübt, wobei das Rastelement 48 aus den als Unterbrechungen ausgebildeten Rastmitteln 44, 46 herausgezogen wird und die Stromversorgungseinheit 18 freigegeben wird.

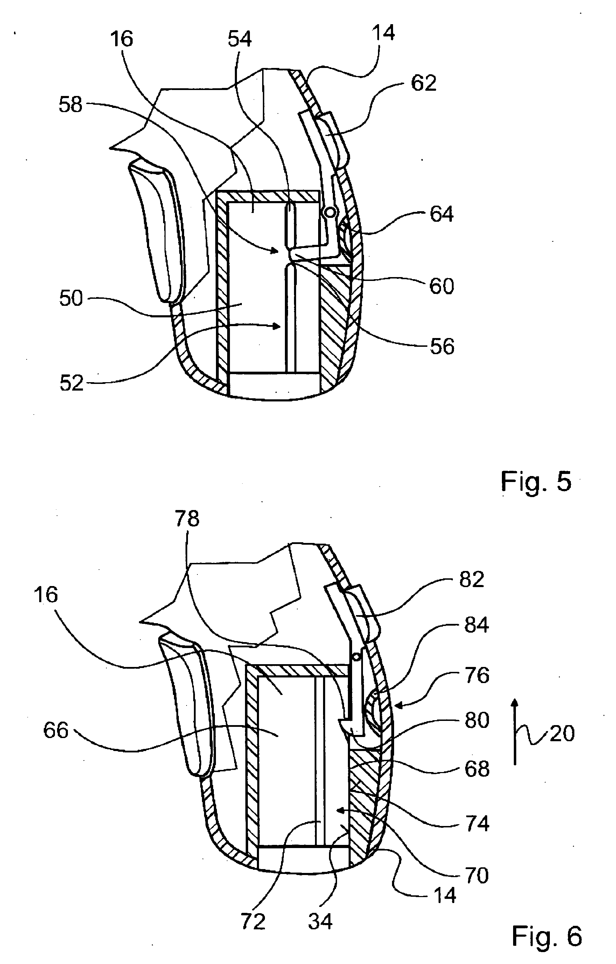

In Figur 5 ist eine weitere Ausführungsform einer Stromversorgungseinheit 50 dargestellt, die im Aufnahmebereich 16 angeordnet ist. Diese ist ähnlich ausgestaltet wie die Stromversorgungseinheit 18 aus Figur 3 und umfasst ein Führungsmittel 52 mit einer Führungsleiste 54. Des Weiteren weist die Stromversorgungseinheit 18 eine ein Rastmittel 56 umfassende Verriegelungseinrichtung 58 auf, wobei das Rastmittel 56 von einer Unterbrechung der Führungsleiste 54 gebildet ist. In dieses Rastmittel 56 ist im verriegelten Zustand ein Rastelement 60 eingerastet, das einstückig an ein als Hebel ausgeführtes Betätigungselement 62 angeformt ist. Das Rastelement 60 ist von einer Feder 64 in das Rastmittel 56 hineingedrückt. Bei einem Entriegeln der Stromversorgungseinheit 50 wird eine Druckkraft auf das Betätigungselement 62 ausgeübt, wobei das Rastelement 60 aus dem Rastmittel 56 herausgezogen wird und die Stromversorgungseinheit 50 freigegeben wird.

Ein weiteres Ausführungsbeispiel einer Stromversorgungseinheit 66 ist in Figur 6 dargestellt. Diese weist ein Gehäuse 68 und ein Führungsmittel 70 auf, das eine Führungsleiste 72 umfasst. Das Gehäuse 68 weist eine Seitenfläche auf, die ein weiteres Führungsmittel 74 der Stromversorgungseinheit 66 bildet. Die Seitenfläche ist bei einem Hineinführen der Stromversorgungseinheit 66 in den Aufnahmebereich 16 parallel zur Aufnahmerichtung 20 ausgerichtet und liegt an der inneren Fläche 34 des Handgriffs 14 an, wodurch die Stromversorgungseinheit 66 in Aufnahmerichtung 20 geführt wird. Zum Verriegeln der Stromversorgungseinheit 66 weist diese eine Verriegelungseinrichtung 76 auf, die ein als eine Ausformung des Führungsmittels 74 ausgebildetes Rastmittel 78 umfasst. In dieses Rastmittel 78 ist im verriegelten Zustand ein Rastelement 80 eingerastet, das einstückig an ein als Hebel ausgeführtes Betätigungselement 82 angeformt ist. Das Rastelement 80 wird durch eine Feder 84 in das Rastmittel 78 hineingedrückt.

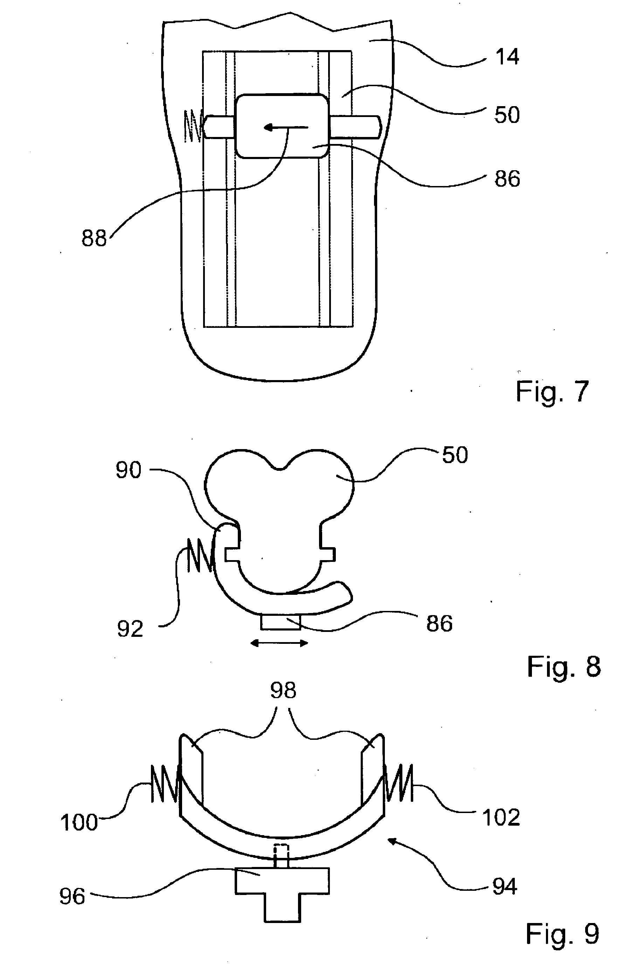

In Figur 7 ist der Handgriff 14 der Handwerkzeugmaschine 10 gezeigt, in welchem die Stromversorgungseinheit 50 aus Figur 5 angeordnet ist. Der Handgriff 14 ist mit einem alternativen Betätigungselement 86 versehen, durch dessen Schieben in einer von einem Pfeil 88 gezeigten Richtung die im Aufnahmebereich 16 verriegelte Stromversorgungseinheit 50 freigegeben wird. Die Anordnung der Stromversorgungseinheit 50 und des Betätigungselements 86 ist in Figur 8 von oben dargestellt. Das Betätigungselement 86 weist ein als Rastklinke ausgeführtes Rastelement 90 auf, das im verriegelten Zustand in das als Unterbrechung ausgeführte Rastmittel 56 aus Figur 5 eingerastet ist und von einer Feder 92 in dieses Rastmittel 56 hineingedrückt wird.

Figur 9 zeigt eine alternative Ausführungsform eines Betätigungselements 94 mit einem Zugknopf 96 und einem Rastelement 98, das im verriegelten Zustand in das Rastmittel 56 aus Figur 5 und in ein weiteres, in Figur 5 nicht dargestelltes Rastmittel beidseitig der Stromversorgungseinheit 50 eingerastet ist. Durch ein Ziehen an dem Zugknopf 96 senkrecht zur Aufnahmerichtung 20 kann die im Aufnahmebereich 16 angeordnete Stromversorgungseinheit 50 freigegeben werden. Zwei Federn 100, 102 dienen dazu, das Rastelement 98 in die Verriegelungsposition zurückzuziehen.

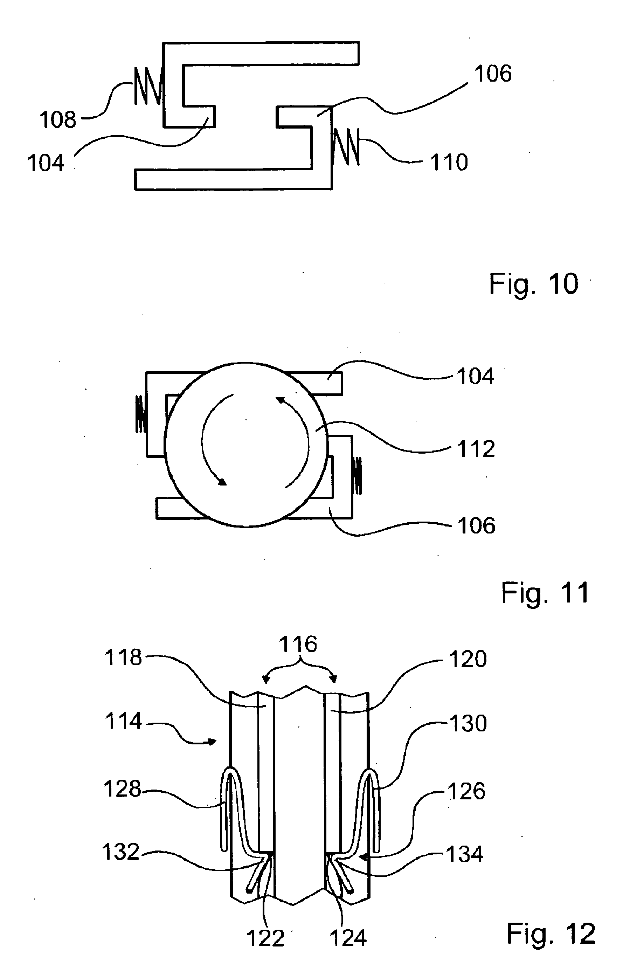

In Figur 10 sind zwei Rastelemente 104, 106 dargestellt, die im verriegelten Zustand der Stromversorgungseinheit 50 aus Figur 5 in das Rastmittel 56 und ein in Figur 5 nicht dargestelltes weiteres Rastmittel beidseitig der Stromversorgungseinheit 50 eingerastet sind und jeweils von einer Feder 108 bzw. 110 in diese Rastmittel hineingedrückt werden. In Figur 11 ist ein Betätigungselement 112 gezeigt, wobei durch ein Drehen dieses Betätigungselements 112 die Rastelemente 104, 106 jeweils in eine in Figur 11 gezeigte, die Stromversorgungseinheit 50 freigebende Position verstellt werden.

Eine weitere Ausführungsform einer Stromversorgungseinheit 114 ist in Figur 12 dargestellt. Zu erkennen ist ein Führungsmittel 116 mit zwei Führungsleisten 118, 120. Diese weisen jeweils ein als Ausformung ausgebildetes Rastmittel 122 bzw. 124 einer Verriegelungseinrichtung 126 auf, mittels der die Stromversorgungseinheit 114 im Aufnahmebereich 16 verriegelt werden kann. Die Verriegelungseinrichtung 126 ist außerdem mit zwei im Handgriff 14 fixierten Federelementen 128, 130 versehen, die jeweils eine Rastausformung 132 bzw. 134 umfassen, wobei die Rastausformung 132 bzw. 134 im verriegelten Zustand jeweils in das Rastmittel 122 bzw. 124 eingerastet ist. Die Federelemente 128, 130 sind jeweils von einem metallischen Federhaken gebildet, wobei der Einsatz von Haken aus Kunststoff, die z.B. in den Handgriff 14 eingelegt sind, ebenfalls denkbar ist.

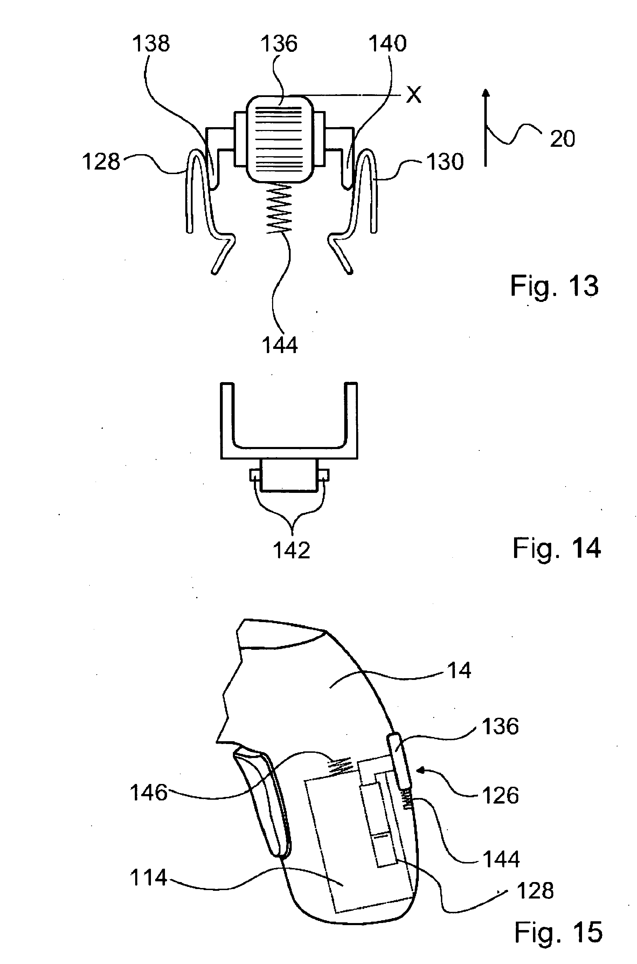

Zum Entriegeln der Stromversorgungseinheit 114 ist der Handgriff 14 mit einem als Schieber ausgeführten Betätigungselement 136 versehen, das in Figur 13 gezeigt ist. Dieses ist in Aufnahmerichtung 20 relativ zum Aufnahmebereich 16 beweglich, und durch ein Schieben in die der Aufnahmerichtung 20 entgegengesetzte Richtung kann die Stromversorgungseinheit 114 freigegeben werden. Bei diesem Schieben werden die Federelemente 128, 130 durch ein Drücken von Enden 138, 140 des Betätigungselements 136 verformt, bis sie aus den Rastmitteln 122, 124 herausgedrückt sind. Das Schieben des Betätigungselements 136 von einer Anfangsposition X wird von Führungselementen 142 geführt, die in Figur 14 zu erkennen sind und jeweils in nicht näher gezeigte Führungsnuten des Handgriffs 14 eingreifen. Nach einem Entriegeln der Stromversorgungseinheit 114 wird das Betätigungselement 136 durch eine Rückstellfeder 144 in die Anfangsposition X zurückpositioniert.

In Figur 15 ist die Anordnung der Stromversorgungseinheit 114 und der Verriegelungseinrichtung 126 im Handgriff 14 dargestellt. Nach einem Entriegeln durch das-Schieben des Betätigungselements 136 wird die Stromversorgungseinheit 114 von einer Auswurffeder 146 aus dem Aufnahmebereich 16 herausgeworfen.

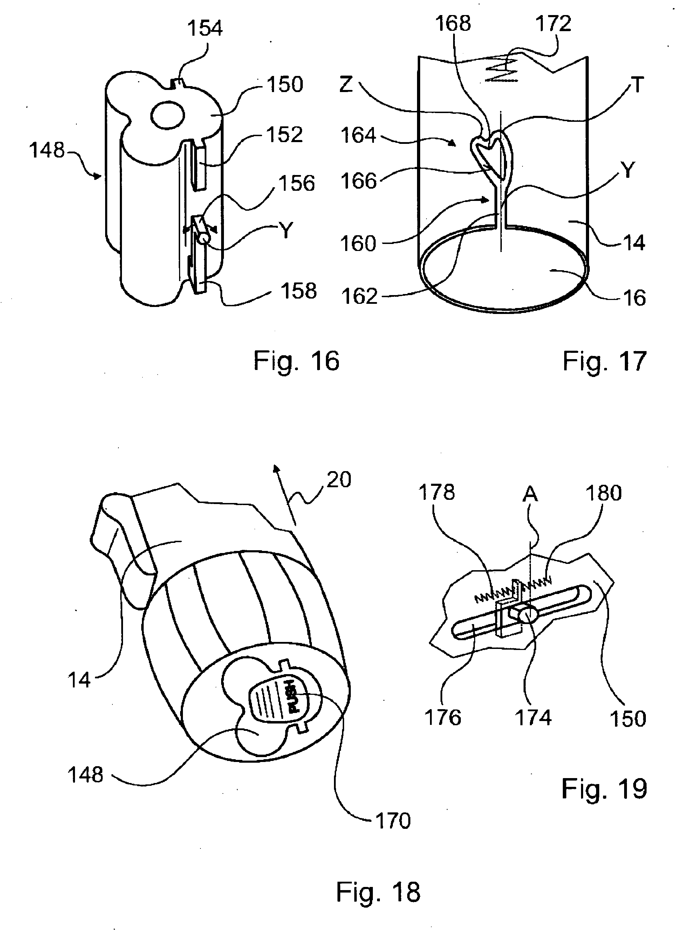

Eine weitere Ausgestaltung einer Stromversorgungseinheit 148 ist in Figur 16 dargestellt. Diese weist ein Gehäuse 150 mit zwei Führungsleisten 152, 154 und einen gefederten Pin 156 auf, der in von den Pfeilen angedeuteten Richtungen um einen Fixpunkt 158 drehbar ist. Bei einer Drehung von einer entspannten Position Y wird eine in der Figur nicht dargestellte Feder gespannt, wodurch eine Rückstellkraft entsteht.

In Figur 17 ist ein zur Stromversorgungseinheit 148 zugehöriger Handgriff 14 gezeigt. Zur Führung der Stromversorgungseinheit 148 in dem Aufnahmebereich 16 ist der Handgriff 14 mit einem Führungsmittel 160 versehen, das einen Führungskanal 162 umfasst. Der Handgriff 14 weist außerdem eine Verriegelungseinrichtung 164 auf, mittels der die Stromversorgungseinheit 148 in dem Aufnahmebereich 16 verriegelt werden kann. Bei einem Hineinführen der Stromversorgungseinheit 148 in den Aufnahmebereich 16 greift der gefederte Pin 156 in den Führungskanal 162 ein und wird von einer Fläche 166 des Führungskanals 162 aus der durch die gestrichelte Linie angedeuteten entspannten Position Y nach links gedrückt, wodurch eine Rückstellkraft entsteht. Wenn der gefederte Pin 156 eine Position Z erreicht hat und die Stromversorgungseinheit 148 losgelassen wird, rastet der gefederte Pin 156 durch die Rückstellkraft in eine als Rastmittel 168 der Verriegelungseinrichtung 164 ausgebildete Ausformung der Fläche 166 hinein, und die Stromversorgungseinheit 148 ist verriegelt. Um die Stromversorgungseinheit 148 zu entriegeln, wird eine Druckkraft auf einem für den Bediener sichtbaren unteren Teil 170 der Stromversorgungseinheit 148 in Aufnahmerichtung 20 ausgeübt, der in Figur 18 dargestellt wird. Dadurch wird die gesamte Stromversorgungseinheit 148 in Bewegung relativ zum Aufnahmebereich 16 gesetzt, der gefederte Pin 156 wird durch die Führungskulisse aus dem Rastmittel 168 herausgedrückt und um eine Strecke bis in eine Position T verstellt. Wenn der Bediener die Stromversorgungseinheit 148 freilässt, wird diese von einer Auswurffeder 172 herausgeworfen und der gefederte Pin 156 wird weiter in dem Führungskanal 162 geführt, bis er aus diesem herausgreift.

Eine alternative Ausführungsform eines Pins, der als Schieberpin 174 ausgebildet ist, ist in Figur 19 dargestellt. Der Schieberpin 174 ist teilweise innerhalb des Gehäuses 150 angeordnet und ist innerhalb eines Führungskanals 176 des Gehäuses 150 beweglich. Bei einer Bewegung in diesem Führungskanal 176 aus einer Anfangsposition A wird eine Feder 178
oder 180 gespannt bzw. zusammengedrückt, wodurch eine Rückstellkraft entsteht. Bei einem Hineinführen der Stromversorgungseinheit 148 ist der Führungskanal 176 senkrecht zum Führungskanal 162 des Handgriffs 14 ausgerichtet, was eine Bewegung des Schieberpins 174 seitlich zur Aufnahmerichtung erlaubt.

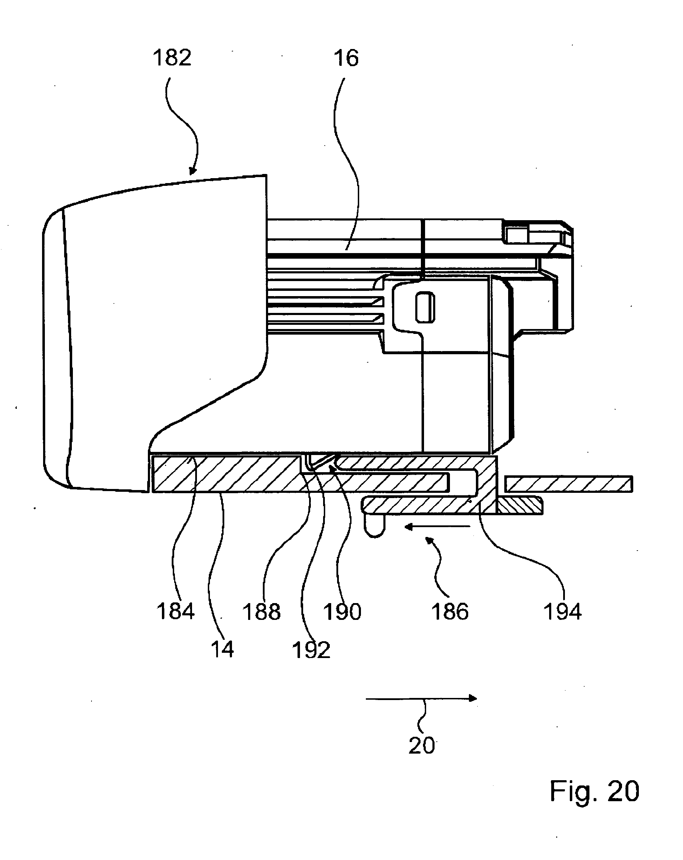

In Figur 20 ist eine weitere Ausführurigsform des Handgriffs 14 dargestellt. Im Aufnahmebereich 16 ist eine Stromversorgungseinheit 182 angeordnet. Eine innere Fläche des Handgriffs 14 bildet ein Führungsmittel 184 zur Führung der Stromversorgungseinheit 182 in dem Aufnahmebereich 16. Die Stromversorgungseinheit 182 kann mittels einer Verriegelungseinrichtung 186 in dem Aufnahmebereich 16 verriegelt werden. Hierzu weist das als innere Fläche ausgebildete Führungsmittel 184 eine Ausnehmung auf, die als Rastmittel 188 der Verriegelungseinrichtung 186 gebildet ist. Die Verriegelungseinrichtung 186 umfasst außerdem eine an der Stromversorgungseinheit 182 befestigte Blattfeder 190, die eine als Rastnase ausgebildete Rastausformung 192 aufweist, wobei die Rastausformung 192 in das Rastmittel 188 im verriegelten Zustand eingerastet ist. Um die Stromversorgungseinheit 182 zu entriegeln, ist der Handgriff 14 mit einem als Schiebeelement ausgebildeten Betätigungselement 194 versehen, das in Aufnahmerichtung 20 beweglich ist. Durch ein Schieben dieses Schiebeelements in die der Aufnahmerichtung 20 entgegengesetzte Richtung wird die Blattfeder 190 in einen die Stromversorgungseinheit 182 freigebenden Zustand verformt.

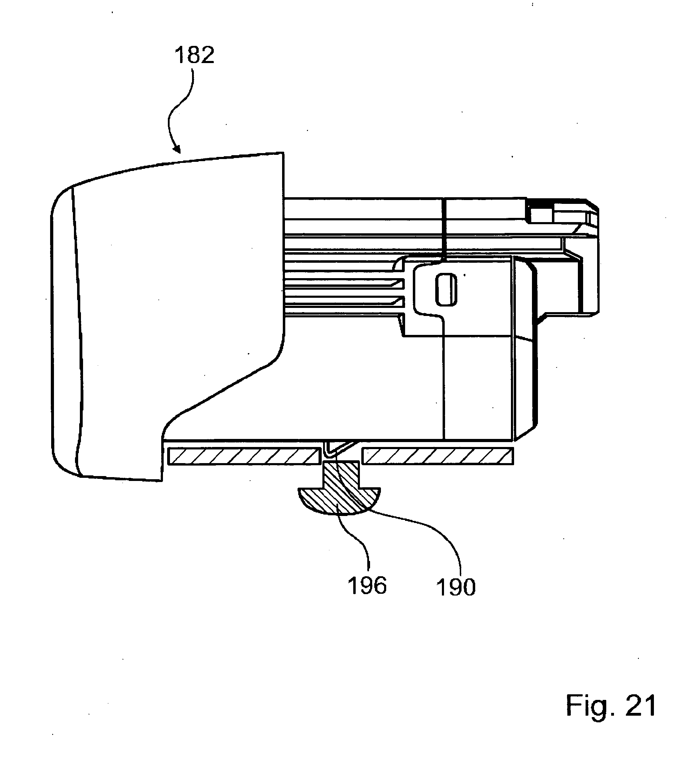

In Figur 21 ist eine weitere Ausführungsform eines Betätigungselements zum Entriegeln der Stromversorgungseinheit dargestellt, wobei die Blattfeder 190 durch ein Betätigen eines Entriegelungsknopfs 196 verformt werden kann.

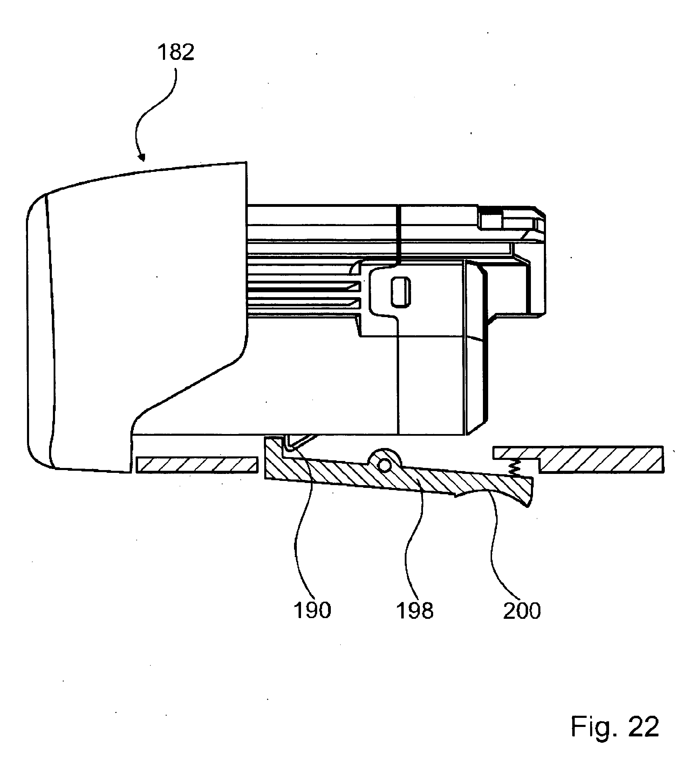

Alternativ kann ein weiteres Betätigungselement als Hebel 198 ausgeführt werden, wie in Figur 22 dargestellt. Durch ein Drücken auf ein Ende 200 des Hebels 198 kann die Stromversorgungseinheit 182 freigegeben werden.

## Patentansprüche

1. Elektrogerät, insbesondere Elektrohandwerkzeug, mit einer abnehmbaren Stromversorgungseinheit (18, 50, 66, 114, 148, 182), einem Aufnahmebereich (16) in einem Handgriff (14) zur Aufnahme der in einer Aufnahmerichtung (20) in den Aufnahmebereich (16) einführbaren Stromversorgungseinheit (18, 50, 66,114, 148, 182), einem Führungsmittel (38, 52, 74, 116, 160, 184) zur Führung der Stromversorgungseinheit (18, 50, 66,114,148, 182) in dem Aufnahmebereich (16) und einer Verriegelungseinrichtung (22, 58, 76, 126, 164, 186) zum Verriegeln der Stromversorgungseinheit (18, 50, 66,114,148,182) in dem Aufnahmebereich (16), wobei die Verriegelungseinrichtung (22, 58, 76,126, 164, 186) ein Rastmittel (44, 46, 56, 78, 122, 124, 168, 188) aufweist, das von einer Ausformung des Führungsmittels (38, 52, 74, 116, 160, 184) gebildet ist, **gekennzeichnet durch** ein Rastelement (48, 98), das im verriegelten Zustand in Ausformungen beidseitig der Stromversorgungseinheit (18, 50) eingerastet ist, wobei das Rastelement (48) von einem zusammenhängenden Betätigungselement (24) gehalten ist.

2. Elektrogerät nach Anspruch 1, **dadurch gekennzeichnet, dass** die Stromversorgungseinheit (66) ein Gehäuse (68) mit einer Seitenfläche aufweist, die als Führungsmittel (74) ausgebildet ist.

3. Elektrogerät nach Anspruch 1 oder 2, **dadurch gekennzeichnet, dass** das Führungsmittel (38, 52, 116) zumindest eine Führungsleiste (40, 42, 54, 118, 120) mit einer als Rastmittel (44, 46, 56, 122,124) ausgebildeten Unterbrechung aufweist.

4. Elektrogerät nach einem der vorhergehenden Ansprüche, **gekennzeichnet durch** ein Betätigungselement (24, 94) zum Entriegeln der Stromversorgungseinheit (18, 50), wobei **durch** ein Ziehen an dem Betätigungselement (24, 94) senkrecht zur Aufnahmerichtung (20) die Stromversorgungseinheit (18, 50) freigegeben wird.

5. Elektrogerät nach einem der vorhergehenden Ansprüche, **gekennzeichnet durch** ein Betätigungselement (136, 194) zum Entriegeln der Stromversorgungseinheit (114, 182), das relativ zum Aufnahmebereich (16) in Aufnahmerichtung (20) beweglich ist.

6. Elektrogerät nach einem der vorhergehenden Ansprüche, **dadurch gekennzeichnet, dass** die Verriegelungseinrichtung (164) zum Entriegeln der Stromversorgungseinheit (148) durch einen an der Stromversorgungseinheit (148) ausgeübten und die gesamte Stromversorgungseinheit (148) relativ zum Aufnahmebereich (16) in Bewegung setzenden Druck in Aufnahmerichtung (20) vorgesehen ist.

7. Elektrogerät nach einem der vorhergehenden Ansprüche, **dadurch gekennzeichnet, dass** die Verriegelungseinrichtung (186) eine Blattfeder (190) aufweist, die eine Rastausformung (192) umfasst.

8. Elektrogerät nach Anspruch 7, **gekennzeichnet durch** ein als Schiebeelement ausgebildetes Betätigungselement (194), wobei die Blattfeder (190) **durch** ein Schieben des Schiebeelements in einer der Aufnahmerichtung (20) entgegengesetzten Richtung in einen die Stromversorgungseinheit (182) freigebenden Zustand verformt wird.

9. Elektrogerät nach einem der vorhergehenden Ansprüche, **dadurch gekennzeichnet, dass** die Stromversorgungseinheit (18) Energiespeichereinheiten (36) umfasst, wobei alle Energiespeichereinheiten (36) im verriegelten Zustand der Stromversorgungseinheit (18) im Aufnahmebereich (16) angeordnet sind.

10. Elektrogerät nach einem der vorhergehenden Ansprüche, **gekennzeichnet durch** ein Betätigungselement (112) zum Entriegeln der Stromversorgungseinheit (50), wobei **durch** ein Drehen des Betätigungselements (112) die Stromversorgungseinheit (50) freigegeben wird.

11. Elektrogerät nach einem der vorhergehenden Ansprüche, **gekennzeichnet durch** ein als Hebel ausgeführtes Betätigungselement (62, 82) zum Entriegeln der Stromversorgungseinheit (50, 66), wobei **durch** eine Druckkraft auf das Betätigungselement (62, 82) die Stromversorgungseinheit (50, 66) freigegeben wird.

12. Elektrogerät nach einem der vorhergehenden Ansprüche, **gekennzeichnet durch** eine Auswurffeder (146, 172) zum Auswerfen der Stromversorgungseinheit (114, 148) aus dem Aufnahmebereich (16).

## Claims

1. Electric device, in particular a portable electric power tool, having a removable power supply unit (18, 50, 66, 114, 148, 182), a receiving region (16) in a handle (14) for receiving the power supply unit (18, 50, 66, 114, 148, 182), which can be inserted into the receiving region (16) in a receiving direction (20), a guide means (38, 52, 74, 116, 160, 184) for guiding the power supply unit (18, 50, 66, 114, 148, 182) in the receiving region (16), and a locking device (22, 58, 76, 126, 164, 186) for locking the power supply unit (18, 50, 66, 114, 148, 182) in the receiving region (16), wherein the locking device (22, 58, 76, 126, 164, 186) has a latching means (44, 46, 56, 78, 122, 124, 168, 188) which is formed by a shaped portion of the guide means (38, 52, 74, 116, 160, 184), **characterized by** a latching element (48, 98) which is latched in place in the locked state in shaped portions on both sides of the power supply unit (18, 50), the latching element (48) being held by a cohesive actuating element (24).

2. Electric device according to Claim 1, **characterized in that** the power supply unit (66) has a housing (68) with a side surface which is designed as guide means (74).

3. Electric device according to Claim 1 or 2, **characterized in that** the guide means (38, 52, 116) has at least one guide strip (40, 42, 54, 118, 120) having an interruption designed as latching means (44, 46, 56, 122, 124).

4. Electric device according to one of the preceding claims, **characterized by** an actuating element (24, 94) for unlocking the power supply unit (18, 50), the power supply unit (18, 50) being released by pulling on the actuating element (24, 94) perpendicularly to the receiving direction (20).

5. Electric device according to one of the preceding claims, **characterized by** an actuating element (136, 194) for unlocking the power supply unit (114, 182), said actuating element (136, 194) being movable relative to the receiving region (16) in receiving direction (20).

6. Electric device according to one of the preceding claims, **characterized in that** the locking device (164) is provided for unlocking the power supply unit (148) by means of a pressure in the receiving direction (20) which is exerted on the power supply unit (148) and moves the entire power supply unit (148) relative to the receiving region (16).

7. Electric device according to one of the preceding claims, **characterized in that** the locking device (186) has a leaf spring (190) which comprises a shaped latching portion (192).

8. Electric device according to Claim 7, **characterized by** an actuating element (194) designed as a slide element, wherein the leaf spring (190) is deformed into a state releasing the power supply unit (182) by a displacement of the slide element in a direction opposed to the receiving direction (20).

9. Electric device according to one of the preceding claims, **characterized in that** the power supply unit (18) comprises energy storage units (36), all the energy storage units (36) being arranged in the receiving region (16) in the locked state of the power supply unit (18).

10. Electric device according to one of the preceding claims, **characterized by** an actuating element (112) for unlocking the power supply unit (50), the power supply unit (50) being released by rotating the actuating element (112).

11. Electric device according to one of the preceding claims, **characterized by** an actuating element (62, 82) designed as a lever for unlocking the power supply unit (50, 66), the power supply unit (50, 66) being released by applying a pressure to the actuating element (62, 82).

12. Electric device according to one of the preceding claims, **characterized by** an ejecting spring (146, 172) for ejecting the power supply unit (114, 148) from the receiving region (16).

## Revendications

1. Appareil électrique, en particulier outil électrique à main, comprenant une unité d'alimentation électrique amovible (18, 50, 66, 114, 148, 182), une région de réception (16) dans une poignée (14) pour recevoir l'unité d'alimentation électrique (18, 50, 66, 114, 148, 182) pouvant être introduite dans une direction de réception (20) dans la région de réception (16), un moyen de guidage (38, 52, 74, 116, 160, 184) pour le guidage de l'unité d'alimentation électrique (18, 50, 66, 114, 148, 182) dans la région de réception (16) et un dispositif de verrouillage (22, 58, 76, 126, 164, 186) pour verrouiller l'unité d'alimentation électrique (18, 50, 66, 114, 148, 182) dans la région de réception (16), le dispositif de verrouillage (22, 58, 76, 126, 164, 186) présentant un moyen d'encliquetage (44, 46, 56, 78, 122, 124, 168, 188) qui est formé par une formation du moyen de guidage (38, 52, 74, 116, 160, 184), **caractérisé par** un élément d'encliquetage (48, 98) qui, dans l'état verrouillé, est encliqueté dans des formations de chaque côté de l'unité d'alimentation électrique (18, 50), l'élément d'encliquetage (48) étant maintenu par un élément d'actionnement rattaché (24).

2. Appareil électrique selon la revendication 1, **caractérisé en ce que** l'unité d'alimentation électrique (66) présente un boîtier (68) avec une surface latérale, qui est réalisée sous forme de moyen de guidage (74).

3. Appareil électrique selon la revendication 1 ou 2, **caractérisé en ce que** le moyen de guidage (38, 52, 116) présente au moins une barre de guidage (40, 42, 54, 118, 120) avec une interruption réalisée sous forme de moyen d'encliquetage (44, 46, 56, 122, 124).

4. Appareil électrique selon l'une quelconque des revendications précédentes, **caractérisé par** un élément d'actionnement (24, 94) pour déverrouiller l'unité d'alimentation électrique (18, 50), l'unité d'alimentation électrique (18, 50) étant libérée par une traction sur l'élément d'actionnement (24, 94) perpendiculairement à la direction de réception (20).

5. Appareil électrique selon l'une quelconque des revendications précédentes, **caractérisé par** un élément d'actionnement (136, 194) pour déverrouiller l'unité d'alimentation électrique (114, 182), qui est déplaçable par rapport à la région de réception (16) dans la direction de réception (20).

6. Appareil électrique selon l'une quelconque des revendications précédentes, **caractérisé en ce que** le dispositif de verrouillage (164) est prévu pour déverrouiller l'unité d'alimentation électrique (148) par une pression dans la direction de réception (20), exercée sur l'unité d'alimentation électrique (148) et mettant en mouvement l'ensemble de l'unité d'alimentation électrique (148) par rapport à la région de réception (16).

7. Appareil électrique selon l'une quelconque des revendications précédentes, **caractérisé en ce que** le dispositif de verrouillage (186) présente un ressort à lame (190) qui comprend une formation d'encliquetage (192).

8. Appareil électrique selon la revendication 7, **caractérisé par** un élément d'actionnement (194) réalisé sous forme d'élément coulissant, le ressort à lame (190) étant déformé par un coulissement de l'élément coulissant dans une direction opposée à la direction de réception (20) dans un état libérant l'unité d'alimentation électrique (182).

9. Appareil électrique selon l'une quelconque des revendications précédentes, **caractérisé en ce que** l'unité d'alimentation électrique (18) comprend des unités d'accumulation d'énergie (36), toutes les unités d'accumulation d'énergie (36) étant disposées dans la région de réception (16) dans l'état verrouillé de l'unité d'alimentation électrique (18).

10. Appareil électrique selon l'une quelconque des revendications précédentes, **caractérisé par** un élément d'actionnement (112) pour déverrouiller l'unité d'alimentation électrique (50), l'unité d'alimentation électrique (50) étant libérée par une rotation de l'élément d'actionnement (112).

11. Appareil électrique selon l'une quelconque des revendications précédentes, **caractérisé par** un élément d'actionnement (62, 82) réalisé sous forme de levier, pour le déverrouillage de l'unité d'alimentation électrique (50, 66), l'unité d'alimentation électrique (50, 66) étant libérée par une force de pression sur l'élément d'actionnement (62, 82).

12. Appareil électrique selon l'une quelconque des revendications précédentes, **caractérisé par** un ressort d'éjection (146, 172) pour éjecter l'unité d'alimentation électrique (114, 148) hors de la région de réception (16).
